(19) Europäisches Patentamt
European Patent Office
Office européen des brevets

(11) Publication number: 0 172 706 A2

# (12) EUROPEAN PATENT APPLICATION

(21) Application number: 85305619.0

(22) Date of filing: 07.08.85

(51) Int. Cl.[4]: C 01 B 11/06

(30) Priority: 09.08.84 US 639052

(43) Date of publication of application: 26.02.86 Bulletin 86/9

(84) Designated Contracting States: BE DE FR GB NL SE

(71) Applicant: OLIN CORPORATION
350 Knotter Drive
Cheshire Connecticut 06410-0586(US)

(72) Inventor: Bridges, William Garlen
Route 3, Mt. Verd Road
Athens Tennessee 37303(US)

(72) Inventor: Neuendorf, Gregg Edward
1395 Windwood Trail, N.W.
Cleveland Tennessee 37311(US)

(74) Representative: Thomas, Roger Tamlyn et al,
D. Young & Co. 10 Staple Inn
London WC1V 7RD(GB)

## (54) Rapidly dissolving calcium hypochlorite particles.

(57) Rapidly dissolving particles of hydrated calcium hypochlorite are produced in a process comprising producing agglomerated granules of hydrated calcium hypochlorite by agitation means. The agglomerated hydrated calcium hypochlorite granules are then crushed to produce hydrated calcium hypochlorite particles having a displacement bulk density of at least about 1.0 grams per milliliter. The crushed multi-layered hydrated calcium hypochlorite particles recovered dissolved in water bodies such as swimming pools significantly faster than commercially produced calcium hypochlorite granules, regardless of the particle size selected.

EP 0 172 706 A2

C-8953

# RAPIDLY DISSOLVING CALCIUM HYPOCHLORITE PARTICLES

This invention relates to a process for producing rapidly dissolving particles of hydrated calcium hypochlorite. Calcium hypochlorite is commercially employed in the sanitation and disinfection of water in swimming pools.

The use of calcium hypochlorite product in the sanitizing and disinfection of water bodies is well known. Commercially employed processes of the prior art produce granular hydrated calcium hypochlorite particles in the form of irregular sharp-edged flakes. These granules have high surface area. When dissolved in water, for example, by casting or sprinkling the granular particles on the surface of a swimming pool, these particles dissolve somewhat slowly and, in addition, leave small amounts of undissolved particles on the bottom of the pool. While it would appear that the solubility rate of these granular products could be raised by decreasing the particle size of the granules, this, however, in commercial manufacturing operations, increases the amount of dust or "fines" produced and requires increased compaction and recycle operations which increase the manufacturing costs significantly.

According to one aspect, the invention provides a process for producing rapidly dissolving particles of hydrated calcium hypochlorite, which comprises producing agglomerated granules of hydrated calcium hypochlorite by agitation means; and crushing the agglomerated granules of hydrated calcium hypochlorite to produce hydrated calcium hypochlorite particles having a displaced bulk density of at least about 1.0 grams per milliliter.

According to another aspect, the invention provides a process for producing rapidly dissolving particles of hydrated calcium hypochlorite, which comprises feeding agglomerated multi-layered granules of hydrated calcium hypochlorite to a crushing means; and crushing the multi-layered calcium granules to produce crushed multi-layered hydrated calcium hypochlorite particles having a displacement bulk density of at least about 1.0 grams per milliliter.

The crushed particles are then recovered in any suitable way.

Preferred features of the invention will now be described.

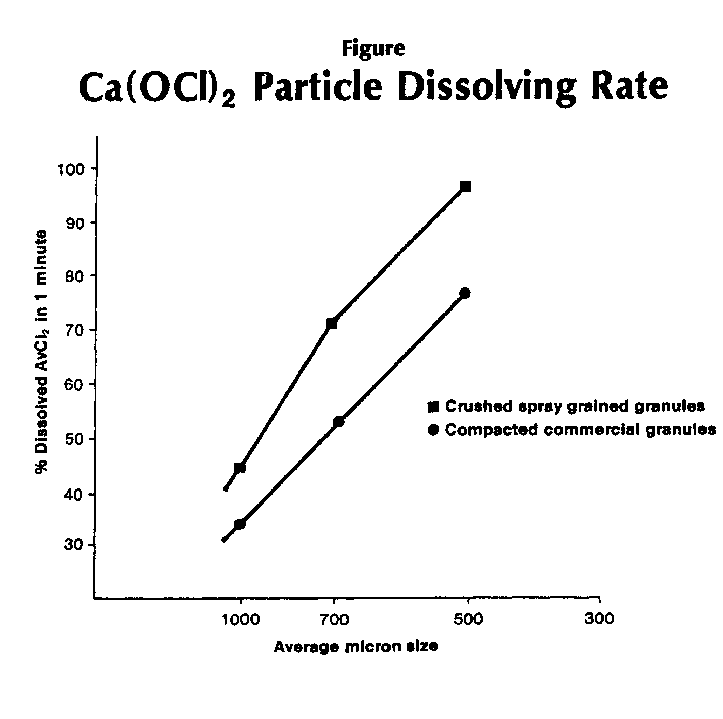

The FIGURE graphically illustrates the improved solubility of the crushed agglomerated calcium hypochlorite granules when compared to the solubility of non-crushed commercial calcium hypochlorite granules.

More in detail, hydrated calcium hypochlorite comprises calcium hypochlorite, $Ca(OCl)_2$, compositions having a water content in the range of from about 4 to about 15 percent by weight, and an available chlorine concentration of at least about 55 percent. In the initial steps of the novel process of the present invention, agglomerated hydrated calcium hypochlorite granules are produced having a regular shape, i.e., rounded or spherical, which have a reduced surface area when compared to the irregularly shaped granules produced by known commercial calcium hypochlorite processes. The agglomerated hydrated calcium hypochlorite granules are produced by agglomeration methods in which agitation is employed. These methods include the use of agitation means such as rotary drums or cylinders; including spray grainers; inclined disks or pans; mixer agglomerators such as turbine mixers (turbo mixers), horizontal pan mixers and pug mills; and fluidized bed apparatus. Suitable agitation methods and apparatus are described, for example, in the Kirk-Othmer Encyclopedia of Chemical Technology, 3rd edition, volume 21, pages 82-89 (N.Y. John Wiley, 1983). A preferred agglomerated hydrated calcium hypochlorite granule produced by the novel process of the present invention is a rounded granular calcium hypochlorite comprised of a core of calcium hypochlorite encapsulated with a plurality of rounded layers of calcium hypochlorite.

Each layer is formed from an aqueous slurry of calcium hypochlorite which contains a high percentage of soluble inorganic salts as well as calcium hypochlorite. These soluble salts impart a high degree of cohesive bonding as each layer is formed and result in rounded granules of higher density and improved dust resistance. The rounded granules are formed from a pumpable and sprayable aqueous slurry of calcium hypochlorite. The composition of the slurry may vary considerably, with any pumpable and sprayable calcium hypochlorite slurry containing from about 45% to about 90% by weight of water and preferably from about 50% to about 60% by weight of water being employable. Generally, the slurry is prepared by admixing water with the filter cake of a calcium hypochlorite produced in any conventional commercial calcium hypochlorite process. Although water is normally used to make up the slurry, any suitable recycle liquid such as a portion of the filtrate produced in commercial calcium hypochlorite processes, scrubber liquor, or other aqueous medium that is inert to calcium hypochlorite may be employed.

The controlling factor in the preparation of this slurry is the percentage by weight of water that is present. Where the percentage of weight of water is below about 45% by weight, the resulting slurry is extremely difficult to pump and spray because it is too viscous and is cake-like, restricting the flow through the pipeline to the spraying means or possibly plugging the spraying means. Where the water concentration is above about 90% by weight, an extremely large amount of water must be evaporated. As a result, the feed rate must be reduced and the production rate is reduced. Furthermore, there is likely to be excessive decomposition of the available chlorine in the calcium hypochlorite particles when the moist calcium hypochlorite particles must be exposed to the heated atmosphere in the drying zone and the final dryer for the extended periods of time that are necessary to effect the evaporation of excessive amounts of water.

It should be noted that the proportion of impurities in the calcium hypochlorite slurry will vary with the type of process employed to prepare the calcium hypochlorite filter cake and also with the nature of the lime initially used to prepare the calcium hypochlorite. A representative analysis of a typical calcium hypochlorite filter cake prepared by a commercial process and a typical preferred analysis range for the calcium hypochlorite filter cake used to prepare the slurry and useful as the starting material in the preparation of particles by a spray graining technique are shown in Table I. This slurry is obtained from the filter cake, for example, by the addition of water.

TABLE I

| Component | Typical Filter Cake Analysis Percent by Weight | Typical Analysis Range Percent by Weight |
|---|---|---|
| Calcium hypochlorite | 45.43 | 42-48 |
| Calcium chloride | 0.44 | 0.0-1.5 |
| Calcium chlorate | 0.02 | 0.0-1.5 |
| Calcium hydroxide | 0.24 | 0.2-2.0 |
| Calcium carbonate | 0.44 | 0.1-2.0 |
| Sodium chloride | 7.75 | 6.0-8.0 |
| Water (difference) | 45.68 | 40-50 |

The calcium hypochlorite slurry is suitable for use directly in, for example, spray graining apparatus for the production of multi-layered granules of hydrated calcium hypochlorite.

Suitable apparatus for spray graining calcium hypochlorite slurries include, for example, the rotary drum apparatus described in U.S. Patent No. 4,276,349, issued June 30, 1981, to W. C. Saeman. The entire disclosure of this patent is incorporated by reference herein. Briefly in the spray graining process, calcium hypochlorite paste slurry is conveyed to the distributing zone of the spray grainer. The distributing zone has a lower portion which contains a bed of solid calcium hypochlorite particles. When the spray grainer is rotated, a moving bed of particulate solids gradually progresses from the feed end of the spray grainer to the discharge end. Positioned around the interior circumference of the spray grainer are a series of flights or lifters which lift particles of calcium hypochlorite from the moving bed in the lower portion to the upper portion of the distributing zone.

The upper portion of the distributing zone contains a plurality of spray nozzles which continuously spray the calcium hypochlorite slurry as fine droplets onto the solid particles falling from the lifters.

Heated air or other inert gas contacts the calcium hypochlorite particles wetted with the slurry to simultaneously evaporate and remove water and to deposit a thin solid layer of the calcium hypochlorite-containing component of the slurry on the surface of the wetted particles. The coated particles fall to the moving bed and continue to be lifted, dropped and coated until they are discharged from the spray grainer.

In an alternate embodiment, multi-layered granular calcium hypochlorite particles are produced in a fluidized bed apparatus as described in, for example, U.S. Patent No. 3,969,546, issued July 13, 1976, to W. C. Saeman. In a fluidized bed apparatus, a moving bed of solid core particles of calcium hypochlorite is suspended by means of a suitable gas such as nitrogen or air to form a distribution zone. The aqueous paste of calcium hypochlorite dihydrate particles is sprayed onto the suspended core particles in the bed. As the calcium hypochlorite paste coats the surface of the core particles, the heated air or nitrogen gas in the bed simultaneously removes and evaporates the water component of the paste, leaving a thin layer of solid calcium hypochlorite on the core particles initially fed into the suspended bed. Freshly deposited pliable solids are hardened by collision impacting with the hard dry core particles. The coating technique is continued as the particles contact additional spray of calcium hypochlorite paste and multi-layered granular particles of calcium hypochlorite are produced.

As discharged from the spray graining apparatus, the rounded calcium hypochlorite particles have a moisture content in the range of from about 5 to about 30 percent by weight. Where the moisture content is above about 15 percent by weight, the particles are normally conveyed to a drying apparatus such as, for example, a rotary dryer.

Generally, the bed temperature in the heating end of, for example, a rotary dryer, is maintained in the range from about 65°C. to about 100°C. and preferably from about 70°C. to about 80°C. In order to maintain this drying bed temperature, heated air or other suitable gas is fed to the dryer concurrently with the feed at a temperature in the range from about 85°C to about 250°C and preferably from about 100°C. to about 200°C. Simultaneously, ambient cooling air having a temperature from about 0° to about 40°C., for example, is fed countercurrently at the discharge end of the dryer in order to reduce the temperature of the dried particles to within a range where decomposition of the available chlorine component of the calcium hypochlorite particles does not occur to a substantial degree. This technique reduces decomposition and also avoids problems of aggregation and sticking of the finished calcium hypochlorite product. The hot dry product can also be conveyed to cooling means such as a separate air-cooled cooling drum, to conveyor coolers with water cooled jackets, to fluidized bed air coolers or the like.

The dried calcium hypochlorite particles from the drying apparatus contain from about 50 to about 85 percent by weight of calcium hypochlorite (dry basis) and from about 4 to about 15, and preferably from about 5 to about 8 percent by weight of water. The balance of the granules is inert salts of the type listed in the filter cake analysis of Table I above. The calcium hypochlorite particles maintain their integrity during the drying stage since the layered structure formed imparts a unique degree of strength to these particles which assists in resisting degradation when subjected to rather severe handling conditions in the dryer. The rounded grains are smooth and devoid of sharp fragile edges and corners which easily form dust under abrasive conditions of movement.

The term "rounded" used to characterize the calcium hypochlorite particles produced in the novel process of this invention is intended to cover particles which are substantially spherical in shape, but which may exhibit "egg-shape" distortion also. Irregularly shaped hydrated calcium hypochlorite particles produced, for example, by processes employing compaction, have a maximum diameter and a minimum diameter. The ratio of the maximum diameter to the minimum diameter of irregular particles of calcium hypochlorite produced in conventional commercial processes is generally greater than about 2:1. In contrast, the novel rounded calcium hypochlorite particles of this invention approach a spherical shape and generally have a ratio of maximum diameter to minimum diameter of about 1.5:1 or less.

Further differences between the rounded particles of the process of this invention and the irregular shaped conventional particles are that the outer surfaces of the rounded particles of this invention are substantially smooth to resist dusting, and the particles are comprised of a core particle coated with a plurality of layers of calcium hypochlorite which are cohesively bonded to each other by depositing the slurry, evaporating the water component of the slurry, and solidifying dissolved solids which serve as a glue or cohesive binder. On a dry basis, from about 27 to about 55 percent by weight of the multi-layered calcium hypochlorite particles is derived from the dissolved salts originally present in the aqueous slurry of calcium hypochlorite. In contrast, the irregular shaped calcium hypochlorite particles of commerce have been formed by compressing wet filter cake between compression rollers to form a sheet-like material, and then fracturing the sheet into irregular shaped platelets which are subsequently dried under quiescient conditions.

The rounded hydrated calcium hypochlorite granules are then crushed to produce irregular shaped calcium hypochlorite particles. Any suitable crushing means may be employed, for example, cage mills, corrugated or smooth roll mills, hammer mills, etc. During crushing, the rounded hydrated calcium hypochlorite granules fracture into integral particles of the granule, rather than decompose into dust, which occurs when conventional irregular shaped calcium hypochlorite particles are crushed under the same conditions.

Following crushing, the crushed multi-layered particles, irregular in shape, are conveyed to a classifying means such as screen sieves or an air classifier. Undersized particles are recycled to be admixed with the calcium hypochlorite slurry which is fed to the agglomeration process. Oversized particles are returned to the crushing means. Crushed particles are classified to provide a product having particle sizes which give the desired dissolving rates. Suitable particle sizes include those in the range of from about 1800 microns (10 mesh) to about 150 microns (100 mesh), and preferably from about 800 microns (20 mesh) to about 300 microns (50 mesh). The crushed particles have a displacement bulk density which is at least 1.0 grams per cubic centimeter and preferably in the range of from about 1.0 to about 2.0 grams per cubic centimeter.

The displacement bulk density is measured by a method such as ASTM Method C493-70 (Standard Test Method for Bulk Density and Porosity of Granular Refractory

0172706

Materials by Mercury Displacement) in which a liquid inert to calcium hypochlorite is substituted for mercury and the heating step to remove water of hydration is eliminated. Suitable inert liquids include saturated aqueous solutions of calcium hypochlorite.

The measurement of displacement bulk density is generally described as follows: A graduate is filled to an initial level with the inert liquid and the volume recorded. A sample of crushed hydrated calcium hypochlorite particles is weighed and the weight recorded. The crushed particles are gradually added to the graduate while stirring the slurry only gently. After addition of the crushed particle sample, the final volume is recorded. The displacement bulk density is calculated as follows:

$$\text{Displacement Bulk Density (g/ml)} = \frac{\text{Weight of Crushed particles (grams)}}{\text{Final Vol. (ml)} - \text{Initial Vol. (ml)}}$$

Crushed multi-layered particles produced by the novel process of the present invention rapidly dissolve in water bodies such as swimming pools while depositing minimal amount of undissolved materials on the pool bottom or walls. Surprisingly, the crushed multi-layered particles dissolve significantly faster than irregularly shaped non-layered calcium hypochlorite particles produced by known commercial processes. In addition, where the multi-layered calcium hypochlorite particles are produced by spray graining, the novel process of the present invention permits optimum grain size of the calcium hypochlorite to be employed to give increased production capacity and reduced recycle of seed grains.

The following examples are presented to illustrate the novel process of the present invention without any intention of being limited thereby. All parts and percentages are by weight unless otherwise specified.

EXAMPLE 1

A pumpable slurry was made by mixing calcium hypochlorite filter cake of the composition of Table I with water to achieve a calcium hypochlorite paste containing 52% by weight of $H_2O$. This paste was subjected to high shear agitation to eliminate lumps. The paste was then sprayed onto a cascading bed of seed particles and small grains within a flighted rotary drum. The droplets formed by the spray coated the seed particles and small grains evenly and randomly during continuous and repeated cascades. Multiple layers of paste were partially dried onto the cores by convective contact with hot dry air (176°C., 350°F.) flowing longitudinally through the drum. Seed particles fed into the drum measured typically 300 to 600 microns (50 to 30 mesh) and spray grained product recovered measured typically 800 to 3400 microns (20 to 6 mesh). The multi-layered product grains, containing approximately 28% $H_2O$, 60% $Ca(OCl)_2$, and 12% NaCl, were dried continuously in a second flighted rotary drum dryer using 132°C. (280°F.) inlet drying air. Both drums were rotated to achieve cascade of the particles over essentially the full cross-sectional area of the drum. The final products leaving the rotary dryer were of rounded shape and had an available chlorine content of about 74%, a moisture content of about 7%, and a displacement bulk density of 1.96 gms./ml. The displacement bulk density was determined by a modification of ASTM method C-493-70, as described above, in which a saturated aqueous solution of calcium hypochlorite is substituted for mercury. The spray grained granules were crushed in a cage mill crusher and the crushed product sifted to recover particles of about 300 to about 1200 microns (50 to 16 mesh). Oversize particles were recrushed, and undersize particles and approximately 1/10 of the onsize particles were recycled to the first rotary drum to serve as seed core for growing more grains. Recovered crushed particles were dispersed on the surface of a 4-foot deep tank and 90% were found to dissolve in 1 minute.

COMPARATIVE EXAMPLE A

The calcium hypochlorite filter cake of the type employed in EXAMPLE 1 was processed in a conventional commercial process which included preforming by high pressure roll compaction, granulating into flakes and drying on tray dryers. The irregularly shaped, non-agglomerated flakes had an available chlorine content of 74%, a moisture content of about 7.3% $H_2O$, and a displaced bulk density of 2.04 gms./ml. The product flakes were sifted to 16 to 50 mesh. When dispersed on the surface of the 4-foot tank of water employed in EXAMPLE 1, only 75% of the flakes dissolved in 1 minute.

EXAMPLE 2

Spray grained granules of hydrated calcium hypochlorite (ca 7% $H_2O$) produced by the process of EXAMPLE 1 were screened to recover granules having a size of about 3400 microns (6 mesh). The granules were crushed in a cage mill and the crushed particles screened to recover particles in three different size ranges: about 1000 microns (18 mesh), about 700 microns (25 mesh), and about 500 microns (35 mesh). A sample of each of the size range of crushed particles was dispersed on surface of the water tank using the procedure of EXAMPLE 1. After one minute, the percent of dissolved available chlorine was determined. The results are depicted on the FIGURE as crushed spray grained granules.

## COMPARATIVE EXAMPLE B

Commercially produced hydrated calcium hypochlorite granules were screened to provide three different granule size ranges identical to those in EXAMPLE 2. The granule sizes were about 1000 microns (18 mesh); about 700 microns (25 mesh) and about 500 microns (35 mesh). A sample of each of the sized commercially produced $Ca(OCl)_2$ particles were dispersed on the surface of the water tank using the procedure of EXAMPLE 1. After one minute, the percent of dissolved available chlorine was determined. The results are depicted on the FIGURE as compacted commercial granules.

The FIGURE clearly illustrates the distinctly higher dissolving rates for the crushed spray grained granules over those of the compacted commercial granules. For each particle size range, the percent of dissolved available chlorine was at least 10% greater for the crushed particles produced by the novel process of the invention than the percent of dissolved available chlorine for the commercial granules.

## CLAIMS

1. A process for producing rapidly dissolving particles of hydrated calcium hypochlorite, which comprises producing agglomerated granules of hydrated calcium hypochlorite by agitation means; and crushing the agglomerated granules of hydrated calcium hypochlorite to produce hydrated calcium hypochlorite particles having a displaced bulk density of at least about 1.0 grams per milliliter.

2. The process of claim 1 in which said agglomerated granules of hydrated calcium hypochlorite have a water content of from about 5 to about 15 percent by weight.

3. The process of claim 1 or 2 in which said agitation means comprises a rotary drum or cylinder; an inclined disk or pan; a mixer agglomerator; or a fluidized bed apparatus.

4. The process of claim 3 in which said agitation means is a rotary drum spray graining apparatus.

5. The process of claim 3 in which said agitation means is a turbine mixer agglomerator.

6. The process of any preceding claim in which said crushing is accomplished by passing said agglomerated granules of hydrated calcium hypochlorite into a crushing means comprising a cage mill, a corrugated or smooth rcll mill, or a hammer mill.

7. The process of any preceding claim in which the crushed aggregated hydrated calcium hypochlorite particles have a particle size in the range of from about 1800 to about 150 microns.

8. A process for producing rapidly dissolving particles of hydrated calcium hypochlorite, which comprises feeding agglomerated multi-layered granules of hydrated calcium hypochlorite to a crushing means; and crushing the multi-layered calcium granules to produce crushed multi-layered hydrated calcium hypochlorite particles having a displacement bulk density of at least about 1.0 grams per milliliter.

9. Crushed agglomerated hydrated calcium hypochlorite particles produced by the process of claim 1 having a displacement bulk density in the range of from about 1.0 to about 2.0 grams per milliliter.

10. Crushed agglomerated hydrated calcium hypochlorite particles of claim 9 having a water content of from about 5 to about 8 percent by weight.

11. Crushed agglomerated hydrated calcium hypochlorite particles of claim 9 or 10 produced from agglomerated hydrated calcium hypochlorite granules having a ratio of maximum diameter to minimum diameter of about 1.5:1.

12. Crushed agglomerated hydrated calcium hypochlorite particles of claim 9, 10 or 11 having a particle size in the range of from about 800 to about 300 microns.

13. The process of any one of claims 1 - 7 wherein the agglomerated granules having sizes in the range from about 800 to about 3400 microns before crushing.

Figure

# $Ca(OCl)_2$ Particle Dissolving Rate

% Dissolved AvCl₂ in 1 minute
100
90
80
70
60
50
40
30
1000
700
500
300
Average micron size
Crushed spray grained granules
Compacted commercial granules